# EUROPEAN PATENT APPLICATION

(11) **EP 2 990 936 A1**
(43) Date of publication of application: **02.03.2016**
(21) Application number: 15182482.8
(22) Date of filing: 26.08.2015
(51) Int. Cl.: G06F 3/147, B60R 1/00, B60W 30/08, G08G 1/16, G06K 9/00

(54) **COMMUNICATION OF SPATIAL INFORMATION BASED ON DRIVER ATTENTION ASSESSMENT**

(30) Priority: 27.08.2014 US 201414470857
(71) Applicant: Toyota Jidosha Kabushiki Kaisha, Toyota-shi, Aichi 471-8571 (JP)
(72) Inventor: SISBOT, Emrah Akin, Mountain View, CA 94040 (US); YALLA, Veeraganesh, Mountain View, CA 94043 (US)
(74) Representative: TBK

(57) **Abstract**

The disclosure includes a system and method for spatial information for a heads-up display. The system includes a processor and a memory storing instructions that, when executed, cause the system to: receive object data about an object, determine a vehicle path for the vehicle, estimate a danger index for the object based on the vehicle data and the object data, detect a user's gaze, determine whether the user sees the object based on the user's gaze, identify a graphic that is a representation of the object, and position the graphic to correspond to the user's eye frame.

## Description

### TECHNICAL FIELD

The specification relates to generating spatial information for a heads-up display based on driver attention assessment.

### BACKGROUND ART

Current heads-up display systems provide a summary of information, such as current speed and warnings about potential dangers. When providing visual information to a driver on a heads-up display, it is important that the information be relevant. Because space on the heads-up display is limited, heads-up display systems may fail to provide the most relevant information because the systems fail to take into account what is important to the user.

### SUMMARY OF INVENTION

According to one innovative aspect of the subject matter described in this disclosure, a system for generating spatial information for a heads-up display based on driver attention assessment includes a processor and a memory storing instructions that, when executed, cause the system to: receive object data about an object, determine a vehicle path for the vehicle, estimate a danger index for the object based on the vehicle data and the object data, detect a user's gaze, determine whether the user sees the object based on the user's gaze, identify a graphic that is a representation of the object, and position the graphic to correspond to the user's eye frame.

In general, another innovative aspect of the subject matter described in this disclosure may be embodied in methods that include: receiving object data about an object, determining a vehicle path for the vehicle, estimating a danger index for the object based on the vehicle data and the object data, detect a user's gaze, determining whether the user sees the object based on the user's gaze, identifying a graphic that is a representation of the object, and positioning the graphic to correspond to the user's eye frame.

These and other embodiments may each optionally include one or more of the following operations and features. For instance, the features include: the object data including object-to-vehicle (X2V) data. In some embodiments, the operations can include: determining whether the user saw the object based on the user's gaze, determining a display modality for the graphic based on the danger index and how long the user saw the object, and displaying, with a heads-up display, the graphic with the display modality; determining whether the user viewed the graphic for longer than a predetermined amount of time and responsive to the user failing to view the graphic for longer than the predetermined amount of time; selecting a more visible modality for the graphic; responsive to the user viewing the graphic for longer than the predetermined amount of time, removing the graphic from the heads-up display; outputting a vector pointing at a direction of the user's gaze; determining how long the user sees the object; responsive to the user seeing the object for longer than a second predetermined amount of time, determining not to select the graphic for display; generating a bounding box for the object; and determining an object path based on the object data and the bounding box.

Other aspects include corresponding methods, systems, apparatus, and computer program products for these and other innovative aspects.

The disclosure is particularly advantageous in a number of respects. For example, the system can detect objects without needing the objects to be in visual range. In addition, the system can alert users to dangerous situations with graphics that are easy to understand. In addition, the heads-up display generates graphics that do not require the driver to change focus to switch between viewing the road and the graph. As a result, the user can react more quickly and possibly avoid a collision.

### BRIEF DESCRIPTION OF DRAWINGS

The disclosure is illustrated by way of example, and not by way of limitation in the figures of the accompanying drawings in which like reference numerals are used to refer to similar elements.
Figure 1 is a block diagram illustrating an example system for generating spatial information for a heads-up display.
Figure 2 is a block diagram illustrating an example safety application for generating object information.
Figure 3A is a graphic representation of detection of a pedestrian and determination of a user's gaze.
Figure 3B is a graphic representation of an example object with a determined danger index.
Figure 3C is a graphic representation example of a graphic selection process.
Figure 3D is a graphic representation example of a heads-up display.
Figures 4A-4B are a flowchart of an example method for generating object information for a heads-up display.
Figure 5 is a diagram illustrating an example configuration of a heads-up display.

### DESCRIPTION OF EMBODIMENTS

### Example System Overview

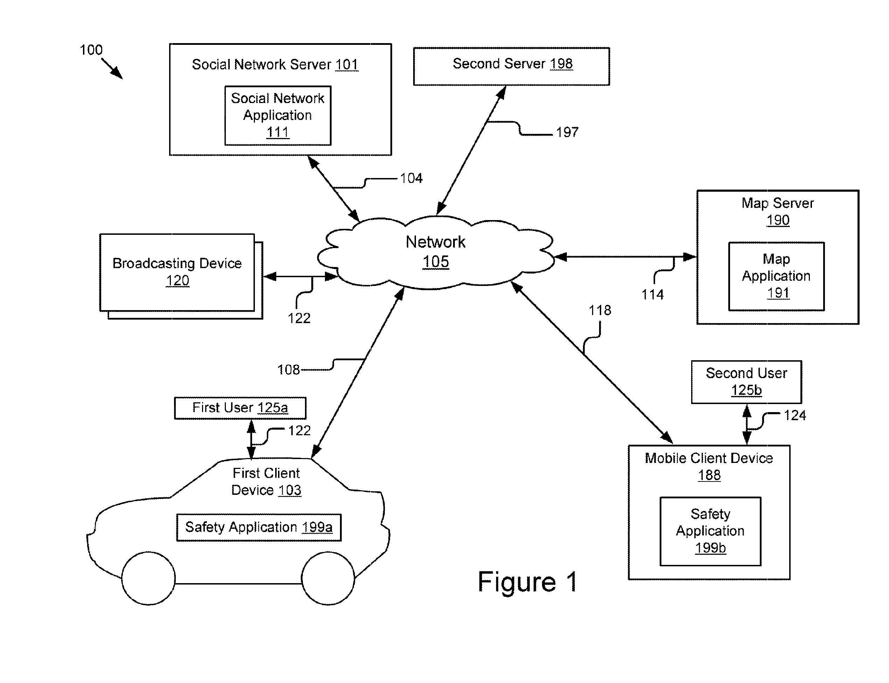

Figure 1 illustrates a block diagram of one embodiment of a system 100 for generating spatial information for a heads-up display based on driver attention assessment. The system 100 includes a first client device 103, a mobile client device 188, a broadcasting device 120, a social network server 101, a second server 198, and a map server 190. The first client device 103 and the mobile client device 188 can be accessed by users 125a and 125b (also referred to herein individually and collectively as user 125), via signal lines 122 and 124, respectively. In the illustrated embodiment, these objects of the system 100 may be communicatively coupled via a network 105. The system 100 may include other servers or devices not shown in Figure 1 including, for example, a traffic server for providing traffic data, a weather server for providing weather data, and a power service server for providing power usage service (e.g., billing service).

The first client device 103 and the mobile client device 188 in Figure 1 can be used by way of example. While Figure 1 illustrates two client devices 103 and 188, the disclosure applies to a system architecture having one or more client devices 103, 188. Furthermore, although Figure 1 illustrates multiple broadcasting devices 120, one broadcasting device 120 is possible. Although Figure 1 illustrates one network 105 coupled to the first client device 103, the mobile client device 188, the social network server 101, the second server 198, and the map server 190, in practice one or more networks 105 can be connected. While Figure 1 includes one social network server 101, one second server 198, and one map server 190, the system 100 could include one or more social network servers 101, one or more second servers 198, and one or more map servers 190.

The network 105 can be a conventional type, wired or wireless, and may have numerous different configurations including a star configuration, token ring configuration, or other configurations. Furthermore, the network 105 may include a local area network (LAN), a wide area network (WAN) (e.g., the Internet), or other interconnected data paths across which multiple devices may communicate. In some embodiments, the network 105 may be a peer-to-peer network. The network 105 may also be coupled to or includes portions of a telecommunications network for sending data in a variety of different communication protocols. In some embodiments, the network 105 includes Bluetooth® communication networks or a cellular communications network for sending and receiving data including via short messaging service (SMS), multimedia messaging service (MMS), hypertext transfer protocol (HTTP), direct data connection, WAP, e-mail, etc. In some embodiments, the network 105 may include a GPS satellite for providing GPS navigation to the first client device 103 or the mobile client device 188. The network 105 may be a mobile data network such as 3G, 4G, LTE, Voice-over-LTE ("VoLTE"), or any other mobile data network or combination of mobile data networks.

The broadcasting device 120 can be a mobile computing device that includes a processor and a memory. For example, the broadcasting device 120 can be a wearable device, a smartphone, a mobile telephone, a personal digital assistant ("PDA"), a mobile e-mail device, a portable game player, a portable music player, or other portable electronic device capable of accessing the network 105. A wearable device includes, for example, jewelry that communicate over the network. The broadcasting device 120 may communicate using a dedicated short-range communications (DSRC) protocol. The broadcasting device 120 provides information about an object. The object may include a pedestrian with a wearable device, a biker with a smartphone, another vehicle, etc.

The broadcasting device 120 transmits X2V data to the safety application 199 as a dedicated short-range communication (DSRC). X2V data includes any type of object-to-vehicle data, such as vehicle-to-vehicle (V2V) data, infrastructure-to-vehicle (I2V) services, and data from other objects, such as pedestrians and bikers. X2V data is data that is sent from an object (X) sent to a vehicle (V) via so-called X2V communication. X2V data may be transmitted directly from the object to the vehicle, or transmitted from the object to vehicle via a relay device. X2V data includes information about the object's position. The object's position may be a position relative to the vehicle, or may be an absolute position. In one embodiment, the X2V data includes one or more bits that are an indication of the source of the data. DSRC are one-way or two-way short-range to medium-range wireless communication channels that are designed for automotive use. DSRC uses the 5.9 GHz band for transmission.

In some embodiments, a safety application 199a can be operable on the first client device 103. The first client device 103 can be a mobile client device with a battery system. For example, the first client device 103 can be one of a vehicle (e.g., an automobile, a bus), a bionic implant, or any other mobile system including non-transitory computer electronics and a battery system. In some embodiments, the first client device 103 may include a computing device that includes a memory and a processor. In the illustrated embodiment, the first client device 103 is communicatively coupled to the network 105 via signal line 108.

In other embodiments, a safety application 199b can be operable on the mobile client device 188. The mobile client device 188 may be a portable computing device that includes a memory and a processor, for example, an in-dash car device, a laptop computer, a tablet computer, a mobile telephone, a personal digital assistant ("PDA"), a mobile e-mail device, a portable game player, a portable music player, or other portable electronic device capable of accessing the network 105. In some embodiments, the safety application 199b may act in part as a thin-client application that may be stored on the first client device 103 and in part as components that may be stored on the mobile client device 188. In the illustrated embodiment, the mobile client device 188 is communicatively coupled to the network 105 via a signal line 118.

In some embodiments, the first user 125 a and the second user 125b can be the same user 125 interacting with both the first client device 103 and the mobile client device 188. For example, the user 125 can be a driver sitting in the first client device 103 (e.g., a vehicle) and operating the mobile client device 188 (e.g., a smartphone). In some other embodiments, the first user 125a and the second user 125b may be different users 125 that interact with the first client device 103 and the mobile client device 188, respectively. For example, the first user 125a could be a drive that drives the first client device 103 and the second user 125b could be a passenger that interacts with the mobile client device 188.

The safety application 199 can be software for generating spatial information for a heads-up display. The safety application 199 receives object data about an object. The object data may be from a sensor, a camera, or a broadcasting device. The safety application 199 categorizes the object and determines a vehicle path for the vehicle. For example, the safety application 199 determines that the object is a pedestrian and the vehicle is heading north west on B St. The safety application 199 estimates a danger index for the object based on vehicle data and object data.

The safety application 199 detects a user's gaze and determines whether the user sees the object based on the user's gaze. If the user looks at an object long enough, the safety application 199 does not need to provide a graphic for the object. If the user does not see the object or does not look at the object long enough, the safety application 199 identifies a graphic that is representative of the object. The safety application 199 may also determine a display modality for the graphic based on the danger index. For example, if a collision could occur in less than five seconds, the safety application 199 makes the graphic flash.

The safety application 199 positions the graphic to correspond to the user's eye frame and determines whether the user views the graphic for longer than a predetermined amount of time. If the user views the graphic for a sufficient amount of time, i.e. longer than the predetermined amount of time, the safety application 199 removes the graphic from the heads-up display. If the user fails to view the graphic for a sufficient amount of time, the safety application 199 uses increasingly visible modalities. For example, the safety application 199 inserts a red flashing warning sign next to the graphic.

In some embodiments, the safety application 199 can be implemented using hardware including a field-programmable gate array ("FPGA") or an application-specific integrated circuit ("ASIC"). In some other embodiments, the safety application 199 can be implemented using a combination of hardware and software. The safety application 199 may be stored in a combination of the devices and servers, or in one of the devices or servers.

The social network server 101 can be a hardware server that includes a processor, a memory, and network communication capabilities. In the illustrated embodiment, the social network server 101 is coupled to the network 105 via a signal line 104. The social network server 101 sends and receives data to and from other objects of the system 100 via the network 105. The social network server 101 includes a social network application 111. A social network can be a type of social structure where the user 125 may be connected by a common feature. The common feature includes relationships/connections, e.g., friendship, family, work, an interest, etc. The common features may be provided by one or more social networking systems including explicitly defined relationships and relationships implied by social connections with other online users, where the relationships form a social graph. In some examples, the social graph can reflect a mapping of these users and how they can be related.

In some embodiments, the social network application 111 generates a social network that may be used for generating object data. For example, other vehicles could be travelling a similar path as the first client device 103 and could identify information about objects that the first client device 103 is going to encounter. For example, where the object is a pedestrian, the other vehicle could determine the speed and direction of the pedestrian from the X2V data. That object data can be used by the safety application 199 to more accurately determine a danger index for the pedestrian.

The map server 190 can be a hardware server that includes a processor, a memory, and network communication capabilities. In the illustrated embodiment, the map server 190 is coupled to the network 105 via a signal line 114. The map server 190 sends and receives data to and from other objects of the system 100 via the network 105. The map server 190 includes a map application 191. The map application 191 may generate a map and directions for the user. In one embodiment, the safety application 199 receives a request for directions from the user 125 to travel from point A to point B and transmits the request to the map server 190. The map application 191 generates directions and a map and transmits the directions and map to the safety application 199 for display to the user. In some embodiments, the safety application 199 adds the directions to the vehicle data 293 because the directions can be used to determine the path of the first mobile device 103.

In some embodiments, the system 100 includes a second server 198 that is coupled to the network via signal line 197. The second server 198 may store additional information that is used by the safety application 199, such as infotainment, music, etc. In some embodiments, the second server 198 receives a request for data from the safety application 199 (e.g., data for streaming a movie, music, etc.), generates the data, and transmits the data to the safety application 199.

### Example Safety Application

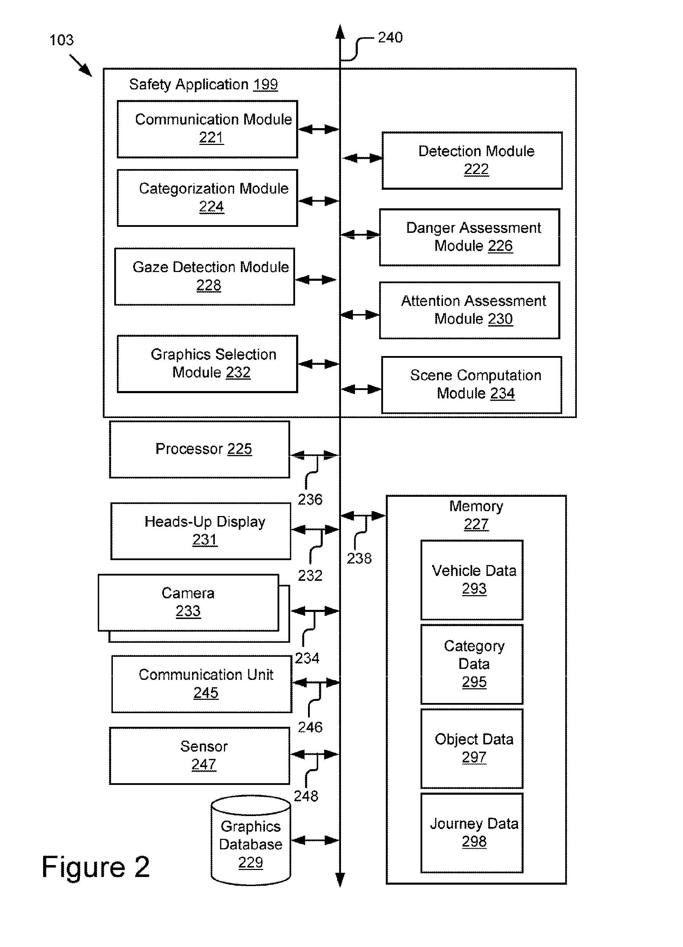

Referring now to Figure 2, an example of the safety application 199 is shown in more detail. Figure 2 is a block diagram of a first client device 103 that includes the safety application 199, a processor 225, a memory 227, a graphics database 229, a heads-up display 231, a camera 233, a communication unit 245, and a sensor 247 according to some examples. The components of the first client device 103 are communicatively coupled by a bus 240.

Although Figure 2 includes the safety application 199 being stored on the first client device 103, persons of ordinary skill in the art will recognize that some of the components the safety application 199 can be stored on the mobile client device 188 where certain hardware would not be applicable. For example, the mobile client device 188 would not include the heads-up display 231 or the camera 233. In embodiments where the safety application 199 is stored on the mobile client device 188, the safety application 199 may receive information from the sensors on the first client device 103 and use the information to determine the graphic for the heads-up display 231, and transmit the graphic to the heads-up display 231 on the first client device 103. In some embodiments, the safety application 199 can be stored in part on the first client device 103 and in part on the mobile client device 188.

The processor 225 includes an arithmetic logic unit, a microprocessor, a general-purpose controller, or some other processor array to perform computations and provide electronic display signals to a display device. The processor 225 is coupled to the bus 240 for communication with the other components via a signal line 236. The processor 225 processes data signals and may include various computing architectures including a complex instruction set computer (CISC) architecture, a reduced instruction set computer (RISC) architecture, or an architecture implementing a combination of instruction sets. Although Figure 2 includes a single processor 225, multiple processors 225 may be included. Other processors, operating systems, sensors, displays, and physical configurations may be possible.

The memory 227 stores instructions or data that may be executed by the processor 225. The memory 227 is coupled to the bus 240 for communication with the other components via a signal line 238. The instructions or data may include code for performing the techniques described herein. The memory 227 may be a dynamic random access memory (DRAM) device, a static random access memory (SRAM) device, flash memory, or some other memory device. In some embodiments, the memory 227 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

As illustrated in Figure 2, the memory 227 stores vehicle data 293, category data 295, object data 297, and journey data 298. The vehicle data 293 includes information about the first client device 103, such as the speed of the vehicle, whether the vehicle's lights are on or off, the intended route of the vehicle as provided by map server 190 or another application. In some embodiments, the sensor 247 may include hardware for determining vehicle data 293. The vehicle data 293 is used by the danger assessment module 226 to determine a danger index for the object.

The category data 295 includes different categories for entities and information about how entities in each category behave. For example, the categories may be broad categories of stationary objects and moving objects, or more specific categories, such as stationary human, moving human, stationary vehicle, moving vehicle, etc. It can be traffic signs, road related objects, informational objects, etc. For example, the category data 295 for a vehicle can include a minimum speed, a maximum speed, and an average speed that are each updated when new vehicle information is identified. The category data 295 is used by the danger assessment module 226 to determine a danger index for the entity.

The object data 297 includes information about the object. For example, where the object data 297 comes from a sensor 247 and/or a camera 233, the object data 297 includes a position and an orientation of the object in a sensor frame, a bounding box of the object, a direction of the motion of the object and its speed. In some embodiments, the object data 297 also includes historical data about how objects behave. In another example, where the object data 297 comes from a broadcasting device 120, the categorization module 224 generates object data 297 from the X2V data including the object's position, speed, and type.

The journey data 298 includes information about the user's journey, such as start points, destinations, durations, routes associated with historical journeys, etc. For example, the journey data 298 could include a log of all locations visited by the first client device 103, all locations visited by the user 125 (e.g., locations associated with both the first client device 103 and the mobile client device 188), locations requested by the user 125, etc.

The graphics database 229 includes a database for storing graphics information. The graphics database 229 contains a set of pre-constructed two-dimensional and three-dimensional graphics that represent different objects. For example, the two-dimensional graphic may be a 2D pixel matrix, and the three-dimensional graphic may be a 3D voxel matrix. The graphics may be simplified representations of objects to decrease cognitive load on the user. For example, instead of representing a pedestrian as a realistic rendering, the graphic of the pedestrian includes a walking stick figure. In some embodiments, the graphics database 229 is a relational database that responds to queries. For example, the graphics selection module 232 queries the graphics database 229 for graphics that match the object data 297.

The heads-up display 231 includes hardware for displaying three-dimensional (3D) graphical data in front of a user such that they do not need to look away from the road to view the graphical data. For example, the heads-up display 231 may include a physical screen or it may project the graphical data onto a transparent film that is part of the windshield of the first client device 103 or part of a reflector lens. In some embodiments, the heads-up display 231 is included as part of the first client device 103 during the manufacturing process or is later installed. In other embodiments, the heads-up display 231 is a removable device. In some embodiments, the graphical data adjusts a level of brightness to account for environmental conditions, such as night, day, cloudy, brightness, etc. The heads-up display is coupled to the bus 240 via signal line 232.

The heads-up display 231 receives graphical data for display from the safety application 199. For example, the heads-up display 231 receives a graphic of a car from the safety application 199 with a transparent modality. The heads-up display 231 displays graphics as three-dimensional Cartesian coordinates (e.g., with x, y, z dimensions).

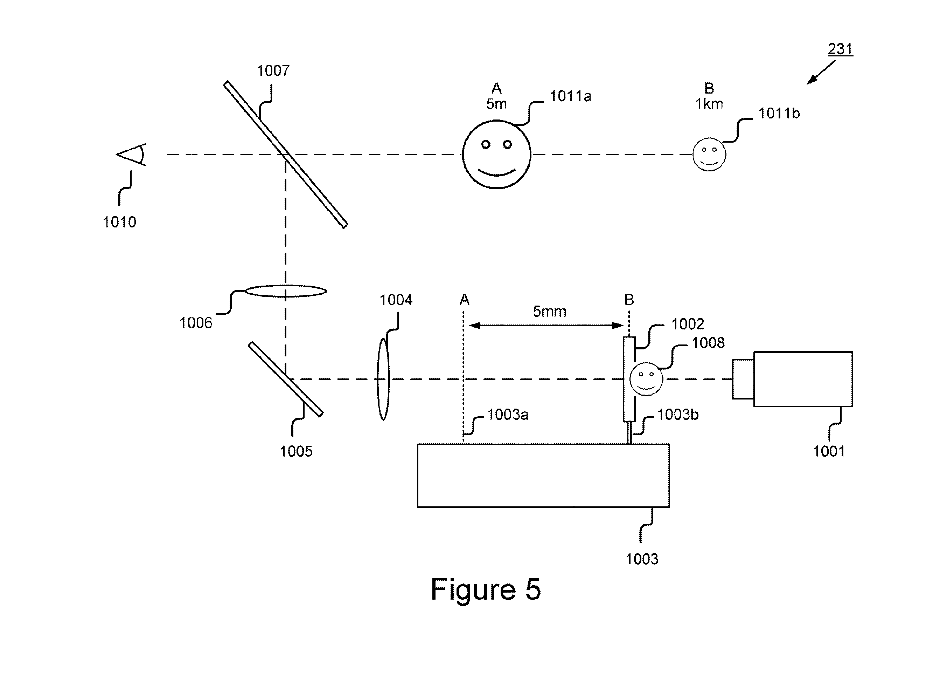

Referring now to Figure 5, an example configuration of the heads-up display 231 is shown in detail. The heads-up display 231 includes a projector 1001, a movable screen 1002, a screen driving unit 1003, an optical system (including lenses 1004, 1006, reflector 1005, etc.). The projector 1001 may be any kind of projector such as a digital mirror device (DMD) project, a liquid crystal projector. The projector 1001 projects an image (graphic) 1008 on the movable screen 1002 The movable screen 1002 includes a transparent plate and so the projected image lights transmit through the movable screen 1002 to be projected on the windshield 1007 of a vehicle (first client device 103). The image projected on the windshield 1007 is perceived by a driver 1010 as if it is a real object (shown as 1011a, 1011b) that exists in the three-dimensional space of the real world, as opposed to an object that is projected on the windshield.]

The heads-up display 231 is capable of controlling the direction of the image relative to the driver 1010 (in other words, the image position in the windshield) by adjusting the projection position on the screen 1002. Further the screen 1002 is movable by the screen-driving unit 1003 in the range between the positions 1003a and 1003b. Adjusting the position of the screen 1002 can vary the depth (distance) of the projected image from the driver 1010 in the real world. In one example, the movable range of the screen 1002 (distance between positions 1003a and 1003b) may be 5mm, which correspond to from 5m away to infinity in the real world. The use of the heads-up display 231 allows the driver 1010 to perceive the projected image exist in the real world (three-dimensional space). For example, when an image is projected at the same three-dimensional position (or substantially same depth at least) as a real object (such as a pedestrian, car, etc.), the driver does not need to adjust eye focus in order to view the projected image, resulting in easy grasp of the projected image while looking at the real object.

The heads-up display 231 depicted in Figure 5 is provided by way of example. Other examples are possible. These examples may include heads-up displays having more or less complexity than the heads-up display 231 depicted in Figure 5. For example, it is anticipated that in the future there will be heads-up displays that do not require movable parts such as the movable screen 1002. For example, a static screen that does not move may be deployed. The content application 103 described above with reference to Figure 2B is designed to be operable with such components.

The camera 233 is hardware for capturing images outside of the first client device 103 that are used by the detection module 222 to identify objects. The cameras 233 include at least one interior camera 233 for capturing images of or recording the user and at least one external camera 233 for capturing images of or recording the road. The camera 233 is coupled to the bus 240 via signal line 234.

The interior camera 233 records the user's face and, in particular, the user's eyes. The recording includes a timestamp for synching with the recording from the exterior camera 233. The interior camera 233 transmits the recording to the safety application 199. In some embodiments where multiple interior cameras 233 are used, the interior cameras 233 may be positioned to capture different angles of the user's face. In some embodiments, an additional interior camera 233 is used to record the road from the user's perspective. For example, the interior camera 233 could be located above the user's head and faces the road.

The exterior camera 233 is positioned in the front part of the car and records roadway objects. For example, the exterior camera 233 is positioned to record everything that the user can see. The recording also includes a timestamp for synching with the recording from the interior camera 233. The exterior camera 233 transmits the recording to the safety application 199. In some embodiments where multiple exterior cameras 233 are used, the exterior cameras 233 may be positioned to maximize the views of the road. For example, the exterior cameras could be positioned on each side of the grill.

The communication unit 245 transmits and receives data to and from at least one of the first client device 103 and the mobile client device 188, depending upon where the safety application 199 is stored. The communication unit 245 is coupled to the bus 240 via a signal line 246. In some embodiments, the communication unit 245 includes a port for direct physical connection to the network 105 or to another communication channel. For example, the communication unit 245 includes a USB, SD, CAT-5, or similar port for wired communication with the first client device 103. In some embodiments, the communication unit 245 includes a wireless transceiver for exchanging data with the first client device 103 or other communication channels using one or more wireless communication methods, including IEEE 802.11, IEEE 802.16, BLUETOOTH®, or another suitable wireless communication method.

In some embodiments, the communication unit 245 includes a cellular communications transceiver for sending and receiving data over a cellular communications network including via short messaging service (SMS), multimedia messaging service (MMS), hypertext transfer protocol (HTTP), direct data connection, WAP, e-mail, or another suitable type of electronic communication. In some embodiments, the communication unit 245 includes a wired port and a wireless transceiver. The communication unit 245 also provides other conventional connections to the network 105 for distribution of files or media objects using standard network protocols including TCP/IP, HTTP, HTTPS, and SMTP, etc.

The sensor 247 is any device that senses physical changes. The first client device 103 may have one type of sensor 247 or many types of sensors. The sensor 247 is coupled to the bus 220 via signal line 248.

The sensor 247 includes hardware for receiving X2V data via short-range communications (DSRC), such as a 802.11p DSRC WAVE Communication Unit. The sensor 247 transmits the X2V data to the communication module 221 or to the memory 227 for storage.

In one embodiment, the sensor 247 includes a laser-powered sensor, such as light detection and ranging (lidar) that are used to generate a three-dimensional map of the environment surrounding the first client device 103. Lidar functions as the eyes of the first client device 103 by shooting bursts of energy at a target from lasers and measuring the return time to calculate the distance. In another embodiment, the sensor 247 includes radar, which functions similar to lidar but uses microwave pulses to determine the distance and can detect smaller objects at longer distances.

In another embodiment, the sensor 247 includes hardware for determining vehicle data 293 about the first client device 103. For example, the sensor 247 is a motion detector, such as an accelerometer that is used to measure acceleration of the first client device 103. In another example, the sensor 247 includes location detection, such as a global positioning system (GPS), location detection through triangulation via a wireless network, etc. In yet another example, the sensor 247 includes hardware for determining the status of the first client device 103, such as hardware for determining whether the lights are on or off, whether the windshield wipers are on or off, etc. In some embodiments, the sensor 247 transmits the vehicle data 293 to the detection module 222 or the danger assessment module 226 via the communication module 202. In other embodiments, the sensor 247 stores the location information as part of the vehicle data 293 in the memory 227.

In some embodiments, the sensor 247 may include a depth sensor. The depth sensor determines depth using structured light, such as a speckle pattern of infrared laser light. In another embodiment, the depth sensor determines depth using time-of-flight technology that determines depth based on the time it takes a light signal to travel between the camera 233 and an object. For example, the depth sensor is a laser rangefinder. The depth sensor transmits the depth information to the detection module 222 via the communication module 202 or the sensor 247 stores the depth information as part of the vehicle data 293 in the memory 227.

In other embodiments, the sensor 247 may include an infrared detector, a motion detector, a thermostat, a sound detector, and any other type of sensors. For example, the first client device 103 may include sensors for measuring one or more of a current time, a location (e.g., a latitude, longitude, and altitude of a location), an acceleration of a vehicle, a velocity of a vehicle, a fuel tank level, and a battery level of a vehicle, etc. The sensors can be used to create vehicle data 293. The vehicle data 293 can also include any information obtained during travel or received from the social network server 101, the second server 198, the map server 190, or the mobile client device 188.

In some embodiments, the safety application 199 includes a communication module 221, a detection module 222, a categorization module 224, a danger assessment module 226, a graphics selection module 232, and a scene computation module 234.

The communication module 221 can be software including routines for handling communications between the safety application 199 and other components of the first client device 103. In some embodiments, the communication module 221 can be a set of instructions executable by the processor 235 to provide the functionality described below for handling communications between the safety application 199 and other components of the first client device 103. In some embodiments, the communication module 221 can be stored in the memory 237 of the first client device 103 and can be accessible and executable by the processor 235.

The communication module 221 sends and receives data, via the communication unit 245, to and from one or more of the first client device 103, the mobile client device 188, the broadcasting device 120, the map server 190, the social network server 101, and the second server 198 depending upon where the safety application 199 is stored. For example, the communication module 221 receives, via the communication unit 245 X2V data from the broadcasting device 120. The communication module 221 transmits the X2V data to the memory 227 for storage and to the categorization module 224 for processing.

In some embodiments, the communication module 221 receives data from components of the safety application 199 and stores the data in the memory 237. For example, the communication module 221 receives data from the sensors 247, and stores it as vehicle data 293 in the memory 237 as determined by the detection module 222.

In some embodiments, the communication module 221 may handle communications between components of the safety application 199. For example, the communication module 221 receives object data 297 from the categorization module 224 and transmits it to the danger assessment module 226.

The detection module 222 can be software including routines for receiving data from the sensor 247 about an object. In some embodiments, the detection module 222 can be a set of instructions executable by the processor 235 to provide the functionality described below for receiving sensor data from the sensor 247. In some embodiments, the detection module 222 can be stored in the memory 237 of the first client device 103 and can be accessible and executable by the processor 235.

In some embodiments, the detection module 222 receives sensor data from at least one of the sensor 247 or the camera 233 and generates object data 297 about the objects. For example, the detection module 222 determines the position of the object relative to the sensor 247 or camera 233. In another example, the detection module 222 receives images or video from the camera 233 and identifies the location of objects, such as pedestrians or stationary objects including buildings, lane markers, obstacles, etc.

The detection module 222 can use vehicle data 293 generated from the sensor 247, such as a location determined by GPS, to determine the distance between the object and the first client device 103. In another example, the sensor 247 includes lidar or radar that can be used to determine the distance between the first client device 103 and the object. The detection module 222 returns an n-tuple containing the position of the object in a sensor frame (x, y, z)ₛ. In some embodiments, the detection module 222 uses the position information to determine a path for the object. The detection module 222 adds the path to the object data 297.

The detection module 222 may receive information from the social network server 101 about the object. For example, where a first client device 103 detects the object before another first client device 103 travels on the same or similar path, the social network server 101 may transmit information to the safety application 199 about the object. For example, the detection module 222 may receive information about the speed of the object from the social network server 101.

In some embodiments, the detection module 222 determines the spatial position of the object and generates a bounding box that surrounds the object. For example, the detection module 222 may generate a bounding box in the shape of a cylinder. Other bounding box shapes are possible including an irregularly shaped bounding box to account for asymmetrical objects. In some embodiments, the detection module 222 returns an n-tuple containing the position of the bounding box of the entity (x_{b}, y_{b}, z_{b})ₛ where coordinate_{b} represents the coordinate for the bounding box relative to the sensor (s).

In some embodiments, the detection module 222 determines a type of object. For example, the detection module 222 determines that the object is an unknown obstacle, a person, a biker, a vehicle, a specific traffic signal, lane marker, a commercial sign, etc. In some embodiments, the detection module 222 outputs the type as part of the n-tuple. For example, the detection module 222 outputs the position of the object in the sensor frame, the bounding box of the object, and the type as [(x, y, z)ₛ, (x_{b}, y_{b}, z_{b})ₛ, T].

In some embodiments, the detection module 222 determines the type of object based on the object's speed. For example, if the object is moving four miles an hour, the object is most likely a person. If the object is moving 20 miles an hour, the object may be a bicycle or a vehicle. The categorization module 224 stores the type information as object data 297.

In some embodiments, the detection module 222 receives X2V data from the communication module 221 or the detection module 222 retrieves the X2V data from the memory. The detection module 222 extracts the object's speed from the X2V data and determines the object's speed based on the position data. For example, if the object is at position A at time T1, and position B at time T2, the distance over time is the object's speed. The detection module 222 stores the speed information as object data 297.

The detection module 222 determines the object's path based on the object data 297. For example, if the X2V data indicates that the object is travelling in a straight line, the detection module 222 determines that the path will likely continue in a straight line. The detection module 222 stores the path as part of the object data 297.

The categorization module 224 can be software including routines for categorizing the object. In some embodiments, the categorization module 224 can be a set of instructions executable by the processor 235 to provide the functionality described below for determining a speed of the object and a type of object. In some embodiments, the categorization module 224 can be stored in the memory 237 of the first client device 103 and can be accessible and executable by the processor 235.

The categorization module 224 generates categories for entities and stores the categories as category data 295. The categorization module 224 receives the entity data 297 from the detection module 222 or retrieves the entity data 297 from memory 227. The categorization module 224 determines a category for the entity and adds the information to the entity data 297 for the entity. For example, the categorization module 224 may categorize a person as a stationary person or a pedestrian. Other categories may include traffic information, moving vehicles, etc. For each category, the categorization module 224 may add information about average speed, predictability of movement, average dimensions for the category, etc. In some embodiments, the categorization module 224 appends the category to the entity information as as [(x, y, z)ₛ, (x_{b}, y_{b}, z_{b})ₛ, T, C].

The danger assessment module 226 can be software including routines for estimating a danger index for the object based on vehicle data 293 and object data 297. In some embodiments, the danger assessment module 226 can be a set of instructions executable by the processor 235 to provide the functionality described below for estimating a danger index for the object. In some embodiments, the danger assessment module 226 can be stored in the memory 237 of the first client device 103 and can be accessible and executable by the processor 235.

In some embodiments, the danger assessment module 226 estimates a danger index for an object based on vehicle data 293 and object data 297. For example, the danger assessment module 226 determines a vehicle path for the first client device 103 based on the object data 297 and compares the vehicle path to an object path to determine whether there is a likelihood of collision between the first client device 103 and the object. If the object is stationary, the danger assessment module 226 determines whether the vehicle's path will intersect with the stationary object.

In some embodiments, the vehicle data 293 may be supplemented by map data provided by the map server 190 and journey data 298 to determine historical behavior associated with the user. The danger assessment module 226 may use this information to determine a path for the first client device 103.

In some embodiments, the object data 207 includes historical information about the object's movement, which the danger assessment module 226 takes into account. In some other embodiments, the danger index is based on the condition of the first client device 103. For example, if the first client device's 103 windshield wipers are on, the danger assessment module 226 may assign a higher danger index because the windshield wipers suggest poor weather conditions. In some embodiments, the danger assessment module 226 also uses a predicted path for the object as a factor in determining the danger index.

The danger index may be probabilistic and reflect a likelihood of collision. For example, the danger index may be calculated as d/dₘₐₓ where dₘₐₓ is a 100. A score of 51/100 would reflect a 51% chance of collision. In some embodiments, the danger assessment module 226 uses a weighted calculation to determine the danger index. For example, the danger assessment module 226 uses the following combination of information: d = f(w₁(speed of vehicle),w₂(weather conditions),w₃(category data),w₄(entity data)) (1)

where w₁ is a first weight, w₂ is a second weight, w₃ is a third weight, and w₄ is a fourth weight. The danger index can be computed analyzing the vehicle's and the entity's directions to decide whether they intersect. If their estimated paths intersect then the system can look into their velocities to decide whether there is a collision risk, and whether the vehicle can stop given the road and weather conditions.

In some embodiments, the danger assessment module 226 divides the danger index into different levels, such as 0-40% being no threat, 41%-60% being moderate threat, 61%-80% being serious threat, and 81%-100% being imminent collision. As a result, if the danger index falls into certain categories, the danger assessment module 226 provides the danger index and the level to the graphics selection module 232 so that the graphics selection module 232 uses a corresponding modality. In some embodiments, the danger assessment module 226 adds the danger index to the entity data 297 as [(x, y, z)ₛ, (x_{b}, y_{b}, z_{b})ₛ, T, C, d/dₘₐₓ].

The gaze detection module 228 can be software including routines for determining whether a user saw an object. In some embodiments, the gaze detection module 228 can be a set of instructions executable by the processor 235 to provide the functionality described below for determining whether a user saw an object. In some embodiments, the gaze detection module 228 can be stored in the memory 237 of the first client device 103 and can be accessible and executable by the processor 235.

The gaze detection module 228 receives the recording of the user while driving from the camera 233. The user receives the object data 297 from the detection module 222 or retrieves the object data 297 from the memory 237. The gaze detection module 228 determines whether the user viewed the object by determining whether the user was looking in the direction of the object. For example, the gaze detection module 228 identifies the location of the user's eyes in a frame to determine where the user is looking at the road. The gaze detection module 228 then compares the user's view to the location of objects from a frame of the recording from the external camera 233 at the same timestamp.

The attention assessment module 230 can be software including routines for determining whether a user viewed an object or graphic for a sufficient amount of time. In some embodiments, the gaze detection module 228 can be a set of instructions executable by the processor 235 to provide the functionality described below for determining whether the user paid attention to the object or graphic. In some embodiments, the attention assessment module 230 can be stored in the memory 237 of the first client device 103 and can be accessible and executable by the processor 235.

The attention assessment module 230 determines whether the user viewed the object for a sufficient amount of time based on a predetermined amount of time. For example, the predetermined amount of time may be five or 10 seconds. In another example, the attention assessment module 230 confirms that the user viewed an object for a sufficient amount of time when the user's pupils dilated, which is an indication of interest. In another embodiment, the attention assessment module 230 uses additional user actions. For example, if the object is a police car and the user slows down after looking in the direction of the police car, the attention assessment module 230 determines that the user viewed the object. In some embodiments, the attention assessment module 230 instructs the scene computation module 234 to deemphasize or remove the graphic output once the attention assessment module 230 determines that the user viewed the object.

The graphics selection module 232 can be software including routines for selecting a graphic and a modality to represent the object. In some embodiments, the graphics selection module 232 can be a set of instructions executable by the processor 235 to provide the functionality described below for selecting the graphic and the modality to represent the object. In some embodiments, the graphics selection module 232 can be stored in the memory 237 of the first client device 103 and can be accessible and executable by the processor 235.

In some embodiments, the graphics selection module 232 queries the graphics database 229 for a matching graphic. In some embodiments, the graphics selection module 232 provides an identification of the object as determined by the detection module 222. For example, the graphics selection module 232 queries the graphics database 229 for a graphic of a bus. In another embodiment, the graphics selection module 232 queries the graphics database 229 based on multiple attributes, such as a mobile vehicle with eighteen tires.

In some embodiments, the graphics selection module 232 requests a modality where the modality is based on the danger index. The modality may be part of the graphic for the object or a separate graphic. The modality reflects the risk associated with the object. For example, the graphics selection module 232 may request a flashing red outline for the object if the danger is imminent. Conversely, the graphics selection module 232 may request a transparent image of the object if the danger is not imminent. In some embodiments, the modality corresponds to the danger levels determined by the danger assessment module 226. For example, 0-40% corresponds to a transparent modality, 41%-60% corresponds to an orange modality, 61%-80% corresponds to a red and flashing modality, and 81%-100% corresponds to a solid red flashing modality.

In some embodiments, the graphics selection module 232 determines the modality based on the position of the object. For example, where the object is a pedestrian walking on a sidewalk along the road, the graphics selection module 232 determines that the modality is a light graphic. The graphics selection module 232 retrieves the graphic Gg from the graphics database 229.

The scene computation module 234 can be software including routines for positioning the graphic to correspond to a user's eye frame. In some embodiments, the scene computation module 234 can be a set of instructions executable by the processor 235 to position the graphic to correspond to the user's eye frame. In some embodiments, the scene computation module 234 can be stored in the memory 237 of the first client device 103 and can be accessible and executable by the processor 235.

In one embodiment, scene computation module 234 transforms the graphic and the modality to the driver's eye box. The eye box is an area with a projected image generated by the heads-up display 231 that is within the driver's field of view. The eye box frame is designed to be large enough that the driver can move his or her head and still see the graphics. If the driver's eyes are too far left or right of the eye box, the graphics will disappear off the edge. Because the eye box is within the driver's field of vision, the driver does not need to refocus in order to view the graphics. In some embodiments, the scene computation module 234 generates a different eye box for each user during calibration to account for variations in height and interocular distance (i.e. distance between the eyes of the driver).

The scene computation module 234 adjusts the graphics to the view of the driver and to the distance between the sensor and the driver's eye box. In one embodiment, the scene computation module 234 computes the graphics in the eye frame G_{eye} based on the spatial position relative to the first client device 103 (x, y, z)ₛ and the graphics Gg. First the transformation from the sensor frame to the eye frame (Tₛ₋ₑ) is computed. The spatial position of the first client device 103, could be based on a GPS sensor (e.g. (x, y, z)_{GPS}). The scene computation module 234 multiplies the Tₛ₋ₑ by the transformation from graphics to sensor frame (T_{g-s}), resulting in the transformation from graphics to eye frame (T_{g-e}). Then the graphics Gg are projected into a viewport placed at a T_{g-e} pose. The scene computation module 234 computes the eye frame so that the driver does not have to refocus when switching the gaze between the road and the graphics. As a result, displaying graphics that keep the same focus for the driver may save between 0.5 and 1 second in reaction time, which for a first client device 103 is travelling at 90 km/h, results in 12.5 to 25 meters further to react to an object.

In some embodiments, the scene computation module 234 generates instructions for the heads-up display 231 to superimpose the graphics on the location of the object. In another embodiment, the scene computation module 234 generates instructions for the heads-up display 231 to display the graphics in another location, or in addition to superimposing the graphics on the real object. For example, the bottom or top of the heads-up display image could contain a summary of the graphics that the user should be looking for on the road.

In some embodiments, the scene computation module 234 determines the field of view for each eye to provide binocular vision. For example, the scene computation module 234 determines an overlapping binocular field of view, which is the maximum angular extent of the heads-up display 231 that is visible to both eyes simultaneously. In some embodiments, the scene computation module 234 calibrates the binocular FOV for each driver to account for variations in interocular distance and driver height.

### Example Graphics Representations

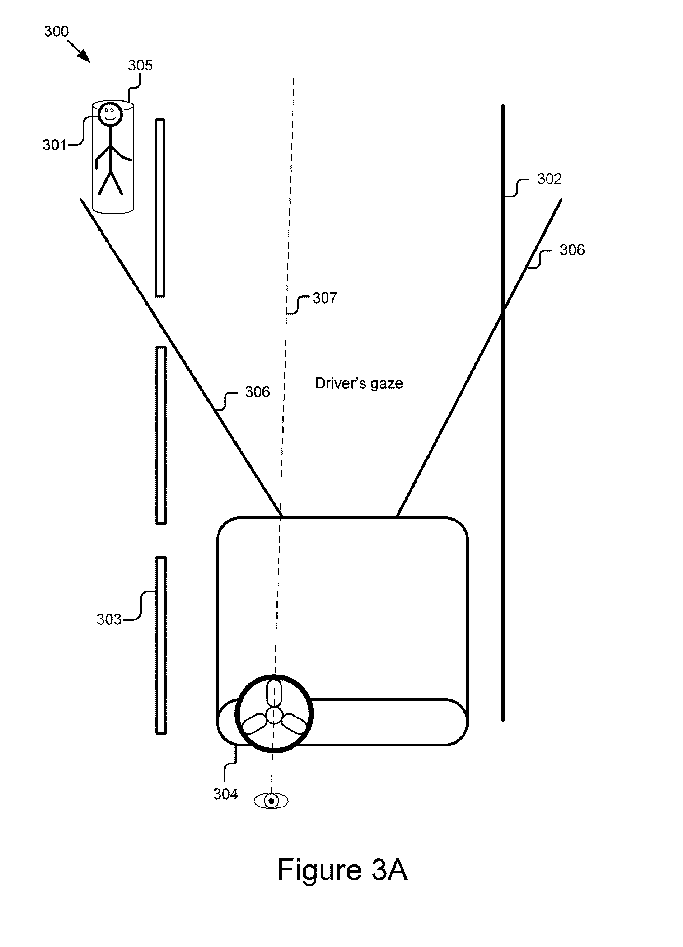

Figure 3A is a graphic representation 300 of a roadway with a person 301 crossing a street. The sensor 247 and/or the camera 233 capture information about the roadway and transmit the information to the detection module 222. The lines 306 emanating from the dashboard 304 of the first client device 103 represent the portion of the roadway captured by the sensor 247 and/or camera 233. The detection module 222 generates a bounding box 305 for the pedestrian. The gaze detection module 228 determines the driver's gaze 307 and the attention assessment module 230 determines that the driver has not looked at the person 301 for a long enough amount of time since the driver has not spent any time looking at the person 301.

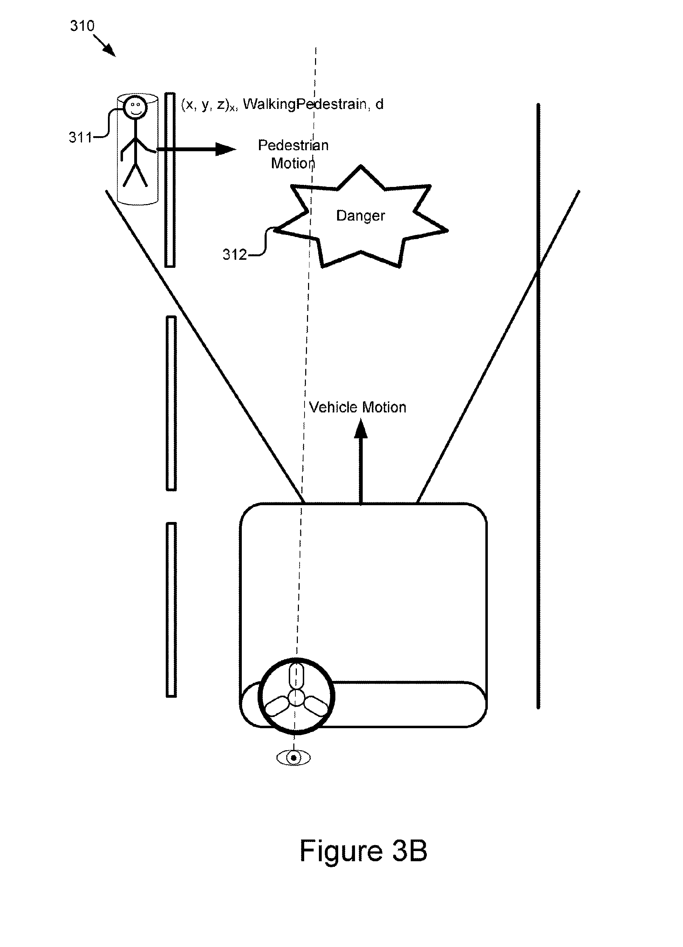

Figure 3B is a graphic representation 310 of an example categorized entity with a determined danger index. The categorization module 224 categorizes the person 311 as a pedestrian and a walking entity. The danger assessment module 226 determines that the object path and the vehicle path are likely to result in a collision as evidenced by the danger icon 312.

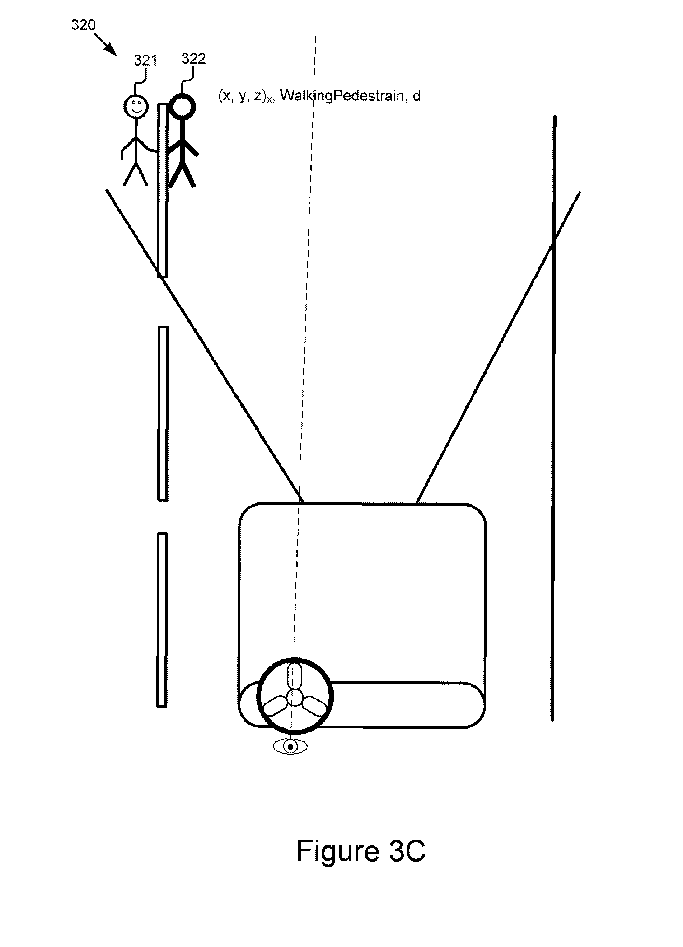

Figure 3C a graphic representation 320 example of a graphic selection process. In this example, the graphics selection module 228 selects a graphic 322 that is a simplified version of the pedestrian 321. This is illustrated with a stick figure 322 instead of a pedestrian with bent arms and a face. In some embodiments, the graphic 322 could include a bright red modality, or animation modality such as flashing to convey the significance of the graphic.

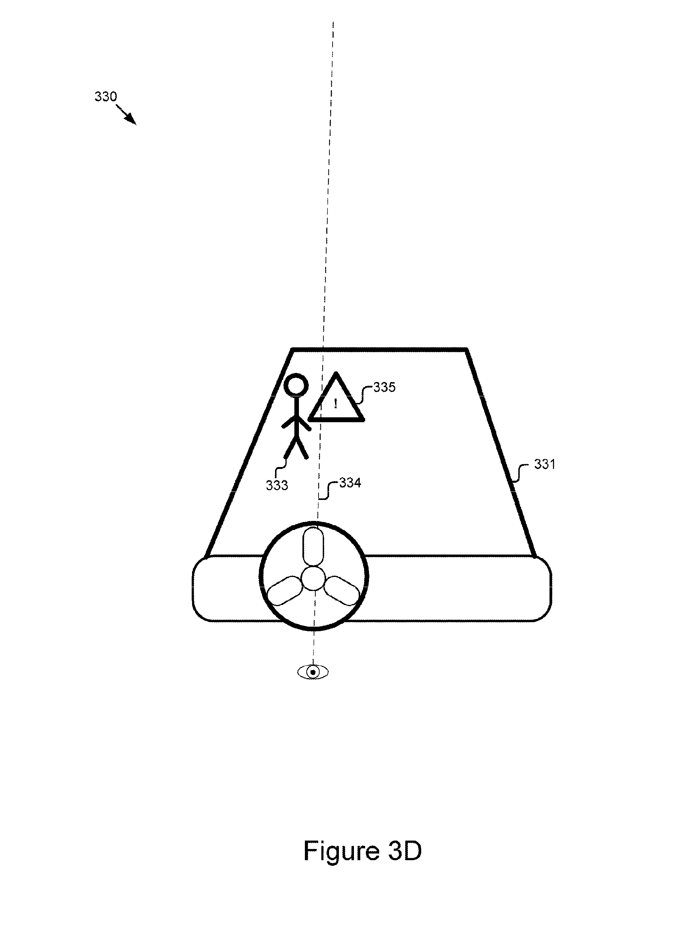

Figure 3D is a graphic representation 330 example of a heads-up display 331. In this example, the scene computation module 230 computes the eye frame based on the spatial position relative to the first client device 103 (x, y, z)ₛ and generates a projected image into the eye position with embedded range information. As a result, the scene computation module 230 places the graphic 333 in 3D without requiring the driver's eyes to refocus.

The gaze detection module 228 determines the user gaze 334. The attention assessment module 230 determines that the user has not seen the graphic 333 based on the user gaze 334. As the vehicle continues down the road and the pedestrian gets closer, the attention assessment module 230 instructs the graphics selection module 232 to select a more visible modality for the graphic 333 to draw the driver's eyes to the graphic 333. In this example, the graphic selection module 232 selects a warning sign 335. Because the warning sign 335 is within the driver's gaze 334, the driver should be alerted to the graphic 333.

### Example Method

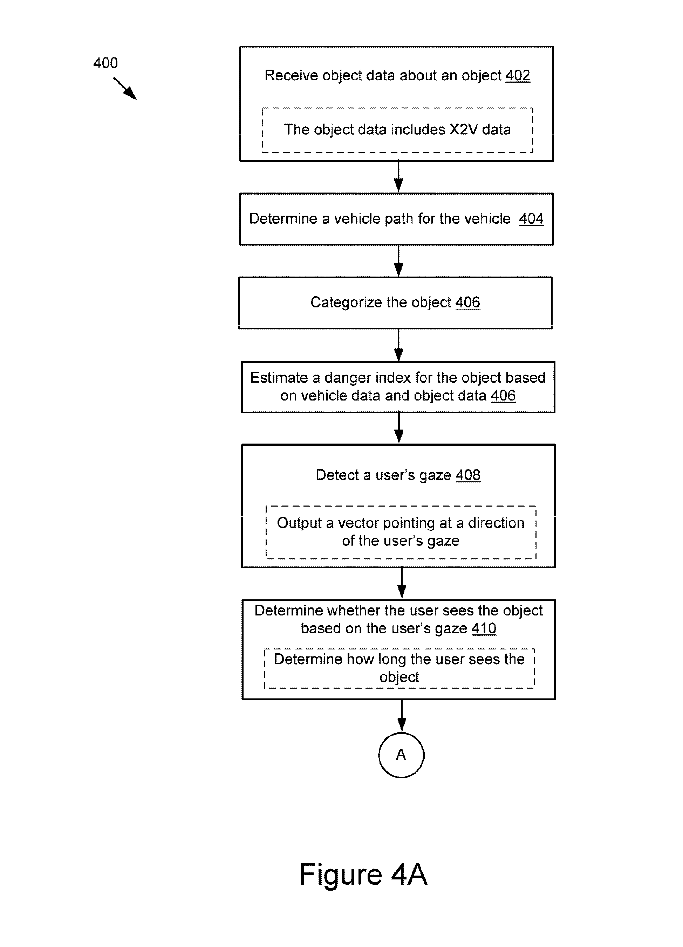

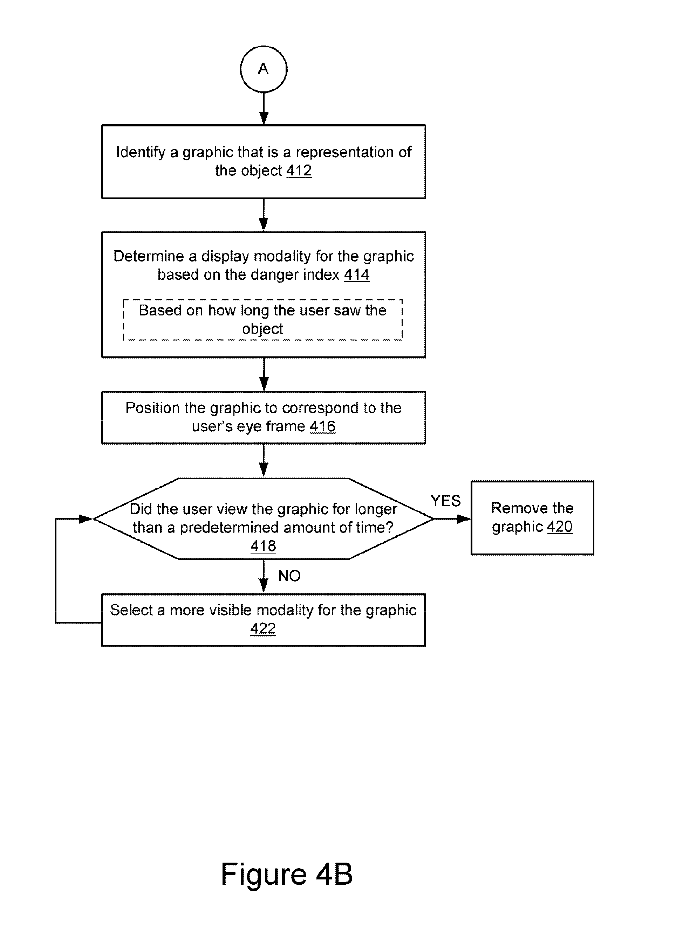

Figures 4A-4B are a flowchart of an example method for generating object information for a heads-up display. In some embodiments, the method 400 may be performed by modules of the safety application 199 stored on the first client device 103 or the mobile client device 188. For example, the safety system 199 may include a detection module 222, a categorization module 224, a danger assessment module 226, a gaze detection module 228, an attention assessment module 230, a graphics selection module 232, and a scene computation module 234.

The detection module 222 receives 402 object data about an object. The object data may include X2V data. The detection module 222 determines 404 a vehicle path for the object. The categorization module 224 categorizes 406 the object. For example, the categories may include moving people, traffic information, moving vehicles, etc. The danger assessment module 226 estimates 406 a danger index for the object based on vehicle data and object data.

The gaze detection module 228 detects 408 a user's gaze. The gaze detection module 228 may output a vector pointing at a direction of the user's gaze. The attention assessment module 230 determines 410 whether the user sees the object based on the user's gaze. The attention assessment module 230 may determine how long the user sees the object.

The graphics selection module 232 identifies 412 a graphic that is a representation of the object and determines 414 a display modality for the graphic based on the danger index. The graphics selection module 232 may also determine the display modality based on how long the user saw the object. The scene computation module 234 positions 416 the graphic to correspond to the user's eye frame.

The attention assessment module 230 determines 418 whether the user viewed the graphic for longer than a predetermined amount of time. If yes, the attention assessment module 230 instructs the scene computation module 234 to remove 420 the graphic from the heads-up display. If not, the attention assessment module 230 instructs the graphics selection module 232 to select 422 a more visible modality for the graphic until the user sees the graphic as determined by the attention assessment module 230.

The embodiments of the specification can also relate to an apparatus for performing the operations herein. This apparatus may be specially constructed for the required purposes, or it may include a general-purpose computer selectively activated or reconfigured by a computer program stored in the computer. Such a computer program may be stored in a computer-readable storage medium, including, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory, or any type of media suitable for storing electronic instructions, each coupled to a computer system bus.

The specification can take the form of some entirely hardware embodiments, some entirely software embodiments, or some embodiments containing both hardware and software elements. In some preferred embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including, but not limited to, keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem, and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the specification as described herein.

The foregoing description of the embodiments of the specification has been presented for the purposes of illustration and description. It is not intended to be exhaustive or to limit the specification to the precise form disclosed. Many modifications and variations are possible in light of the above teaching. It is intended that the scope of the disclosure be limited not by this detailed description, but rather by the claims of this application. As will be understood by those familiar with the art, the specification may be embodied in other specific forms without departing from the spirit or essential characteristics thereof. Likewise, the particular naming and division of the modules, routines, features, attributes, methodologies, and other aspects are not mandatory or significant, and the mechanisms that implement the specification or its features may have different names, divisions, or formats. Furthermore, as will be apparent to one of ordinary skill in the relevant art, the modules, routines, features, attributes, methodologies, and other aspects of the disclosure can be implemented as software, hardware, firmware, or any combination of the three. Also, wherever a component, an example of which is a module, of the specification is implemented as software, the component can be implemented as a standalone program, as part of a larger program, as a plurality of separate programs, as a statically or dynamically linked library, as a kernel-loadable module, as a device driver, or in every and any other way known now or in the future to those of ordinary skill in the art of computer programming. Additionally, the disclosure is in no way limited to embodiment in any specific programming language, or for any specific operating system or environment. Accordingly, the disclosure is intended to be illustrative, but not limiting, of the scope of the specification, which is set forth in the following claims.
The disclosure includes a system and method for spatial information for a heads-up display. The system includes a processor and a memory storing, instructions that, when executed, cause the system to: receive object data about an object, determine a vehicle path for the vehicle, estimate a danger index for the object based on the vehicle data and the object data, detect a user's gaze, determine whether the user sees the object based on the user's gaze, identify a graphic that is a representation of the object, and position the graphic to correspond to the user's eye frame.

## Claims

1. A method performed by a processor-based computing device, comprising:
receiving object data about an object;
determining a vehicle data including a vehicle path for the vehicle;
estimating a danger index for the object based on the vehicle data and the object data;
detecting a user's gaze;
determining whether the user sees the object based on the user's gaze;
identifying a graphic that is a representation of the object; and
positioning the graphic to correspond to the user's eye frame.

2. The method of claim 1, further comprising:
determining whether the user saw the object based on the user's gaze;
determining a display modality for the graphic based on the danger index and how long the user saw the object; and
displaying, with a heads-up display, the graphic with the display modality.

3. The method of claim 2, further comprising:
determining whether the user viewed the graphic for longer than a predetermined amount of time; and
responsive to the user failing to view the graphic for longer than the predetermined amount of time, selecting a more visible modality for the graphic.

4. The method of claim 3, further comprising responsive to the user viewing the graphic for longer than the predetermined amount of time, removing the graphic from the heads-up display.

5. The method of any one of claims 1 to 4, wherein the object data includes object-to-vehicle (X2V) data.

6. The method of any one of claims 1 to 5, wherein detecting the user's gaze further comprises outputting a vector pointing at a direction of the user's gaze.

7. The method of any one of claims 1 to 6, wherein determining whether the user sees the object based on the user's gaze further comprises determining how long the user sees the object.

8. The method of claim 7, responsive to the user seeing the object for longer than a second predetermined amount of time, determining not to select the graphic for display.

9. The method of any one of claim 1 to 8, further comprising generating a bounding box for the object.

10. The method of claim 9, further comprising determining an object path based on the object data and the bounding box.

11. A computer program when executed on a computer causes the computer to execute steps of the method of any one of claims 1 to 10.

12. A system comprising:
a processor; and
a tangible, non-transitory memory storing the computer program of claim 11,
